# EUROPEAN PATENT APPLICATION

(11) **EP 4 080 671 A1**
(43) Date of publication of application: **26.10.2022**
(21) Application number: 21813158.9
(22) Date of filing: 06.05.2021
(51) Int. Cl.: H01M 50/572, H01M 50/543

(54) **BATTERY CELL TRANSFER DEVICE**

(30) Priority: 25.05.2020 KR 20200062194
(71) Applicant: LG Energy Solution, Ltd., Seoul 07335 (KR)
(72) Inventor: KIM, Gyu Hyeon, Daejeon 34122 (KR); KIM, Ki Woong, Daejeon 34122 (KR)
(74) Representative: Plasseraud IP
(86) International application number: PCT/KR2021/005686
(87) International publication number: WO 2021/241904

(57) **Abstract**

The present invention relates to a battery cell transfer apparatus capable of preventing short circuit in or damage to a battery cell during transfer of the battery cell. The battery cell transfer apparatus includes two jigs configured to press and fix opposite surfaces of a battery cell and an electrode tab protection device configured to prevent occurrence of short circuit as the result of an electrode tab coming into contact with the jigs or a peripheral device during transfer of the battery cell, wherein the electrode tab protection device includes an electrode tab insertion portion configured to allow the electrode tab to be inserted thereinto and a fixing portion configured to fix the electrode tab protection device.

## Description

### [Technical Field]

This application claims the benefit of priority to Korean Patent Application No. 2020-0062194 filed on May 25, 2020, the disclosure of which is incorporated herein by reference in its entirety.

The present invention relates to a battery cell transfer apparatus including an electrode tab protection device capable of protecting an electrode tab when a battery cell is transferred.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS) .

The energy storage system (ESS) is a system that stores a large amount of excess power in a battery in order to use the stored power when needed. The energy storage system serves to uniformly maintain quality of power in connection with new and renewable energy generation and to increase efficiency in use of power by storing power at the time when the amount of use of power is small and using the stored power when the demand for power is high. The ESS may mainly be classified as a grid system ESS, an uninterruptible power supply (UPS), or an ESS for domestic use.

There are a lithium ion battery, a lithium polymer battery, a nickel-cadmium battery, a nickel-hydride battery, and a nickel-zinc battery as secondary batteries that are widely used at present.

Among these batteries, the lithium secondary battery includes an electrode assembly, configured such that a positive electrode plate having a positive electrode active material applied thereto and a negative electrode pate having a negative electrode active material applied thereto are disposed in the state in which a separator is interposed therebetween, and a sheathing member configured to receive the electrode assembly in a hermetically sealed state.

In addition, the electrode assembly is provided with an electrode tab protruding outwards from the sheathing member, which is electrically connected to an external device. For the electrode tab, a single positive electrode tab or a plurality of positive electrode tabs may be provided at the positive electrode plate, and a single negative electrode tab or a plurality of negative electrode tabs may be provided at the negative electrode plate.

There is a possibility of the electrode tab coming into contact with an electrically conductive device located therearound during a battery transfer process or during a sealing process, whereby short circuit occurs or the electrode tab is bent and thus damaged.

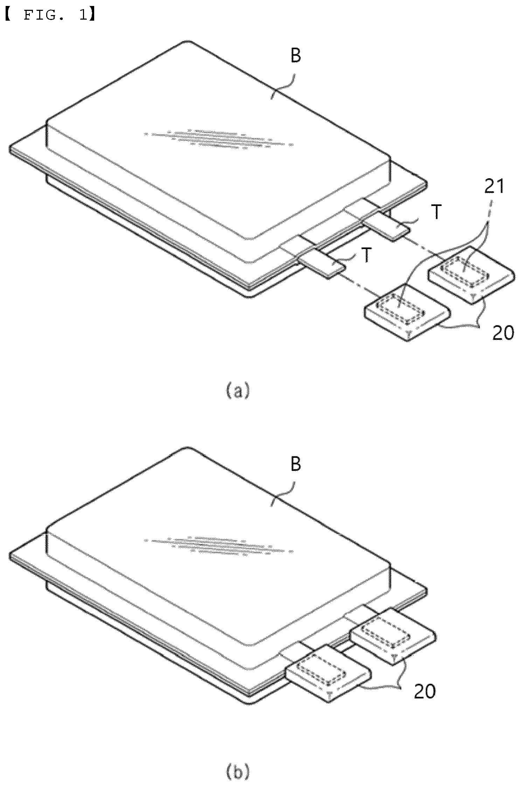

In connection therewith, FIG. 1 shows a conventional electrode tab protection device 20. An electrode tab T may be inserted into an electrode tab insertion portion 21 formed in the electrode tab protection device 20, whereby it is possible to prevent occurrence of short circuit as the result of the electrode tab T being electrically connected to the outside during transfer.

Although the electrode tab protection device 20 of FIG. 1 is capable of preventing occurrence of short circuit as the result of the electrode tab T coming into contact with a structure therearound, such as a jig, or to prevent damage to the electrode tab due to scratch thereof, there is a problem in that the electrode tab protection device 20 is not fixed, whereby it is difficult to prevent damage to the electrode tab as the result of being bent during a transfer process, and therefore it is difficult to protect the electrode tab.

### (Prior Art Document)

(Patent Document 1) Korean Patent Application Publication No. 10-2015-0050210

### [Disclosure]

### [Technical Problem]

The present invention has been made in view of the above problems, and it is an object of the present invention to provide an electrode tab protection device including an electrode tab insertion portion and a fixing portion.

### [Technical Solution]

In order to accomplish the above object, a battery cell transfer apparatus according to the present invention includes two jigs configured to press and fix opposite surfaces of a battery cell and an electrode tab protection device configured to prevent occurrence of short circuit as the result of an electrode tab coming into contact with the jigs or a peripheral device during transfer of the battery cell, wherein the electrode tab protection device includes an electrode tab insertion portion configured to allow the electrode tab to be inserted thereinto and a fixing portion configured to fix the electrode tab protection device.

Also, in the battery cell transfer apparatus according to the present invention, the fixing portion may have one side connected to the electrode tab insertion portion and the other side coupled to the jigs, whereby movement of the electrode tab insertion portion may be prevented during transfer.

Also, in the battery cell transfer apparatus according to the present invention, the electrode tab protection device may be identical in number to the electrode tab such that the electrode tab is individually inserted.

Also, in the battery cell transfer apparatus according to the present invention, the electrode tab protection device may be configured such that the fixing portion is detachably attached to the jigs in a clip form.

Also, in the battery cell transfer apparatus according to the present invention, the fixing portion may be located at one of opposite ends of the electrode tab insertion portion.

Also, in the battery cell transfer apparatus according to the present invention, the fixing portion may be located at a middle part of the electrode tab insertion portion.

Also, in the battery cell transfer apparatus according to the present invention, the electrode tab insertion portion may be made of an electrically insulative material.

In addition, a battery cell transfer method according to the present invention includes locating a battery cell including an electrode tab between two jigs; pressing and fixing the two jigs to fix the battery cell; inserting the electrode tab of the fixed battery cell into an electrode tab protection device; fixing the electrode tab protection device to the jigs; and transferring the jigs having the electrode tab protection device fixed thereto.

Also, in the battery cell transfer method according to the present invention, the electrode tab protection device may include an electrode tab insertion portion configured to allow the electrode tab to be inserted thereinto and a fixing portion configured to fix the electrode tab protection device.

Also, in the battery cell transfer method according to the present invention, the fixing portion may have one side connected to the electrode tab insertion portion and the other side coupled to the jigs, whereby movement of the electrode tab insertion portion may be prevented during transfer.

Also, in the battery cell transfer method according to the present invention, the electrode tab insertion portion may be made of an electrically insulative material.

### [Advantageous effects]

A battery cell transfer apparatus according to the present invention has an advantage in that the battery cell transfer apparatus includes an electrode tab protection device having an electrode tab insertion portion and a fixing portion, whereby it is possible to protect and fix an electrode tab during transfer of a battery cell, and therefore it is possible to prevent occurrence of short circuit as the result of the electrode tab being connected to a peripheral device or damage to the electrode tab, such as bending of the electrode tab.

### [Description of Drawings]

FIG. 1 is a perspective view schematically showing the state in which an electrode tab is protected by a conventional electrode tab protection device.
FIG. 2 is a perspective view schematically showing a battery cell transfer apparatus according to an embodiment of the present invention.
FIG. 3 is a view schematically showing an electrode tab protection device of the present invention.
FIG. 4 is a perspective view showing various embodiments of the electrode tab protection device of the present invention.
FIG. 5 is a view schematically showing a process of fastening the battery cell transfer apparatus according to the present invention to a battery cell.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell transfer apparatus according to the present invention will be described with reference to the accompanying drawings.

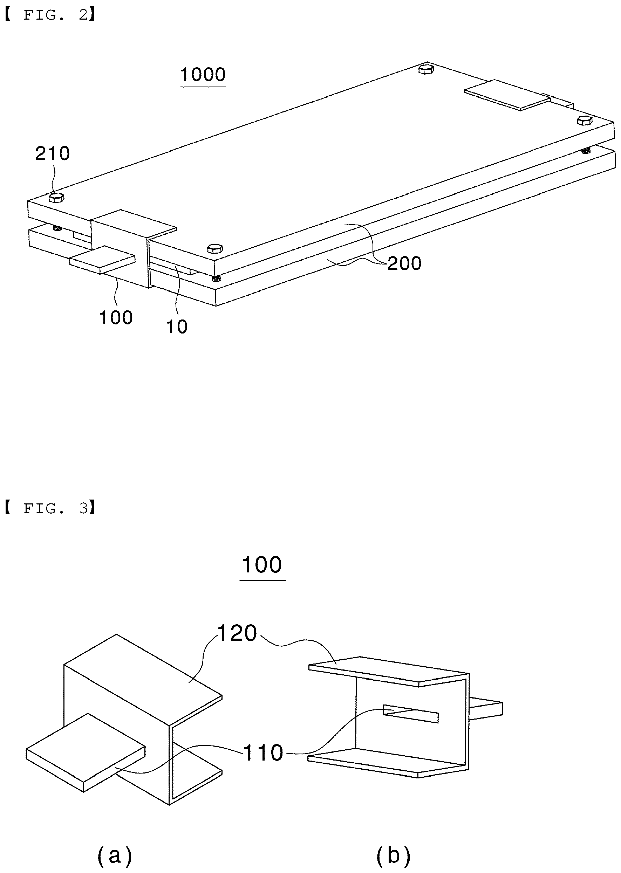

FIG. 2 is a perspective view schematically showing a battery cell transfer apparatus according to an embodiment of the present invention.

When describing the battery cell transfer apparatus 1000 according to the present invention in detail with reference to FIG. 2, the battery cell transfer apparatus 1000 according to the present invention includes an electrode tab protection device 100 configured to protect an electrode tab 11 of a battery cell 10 and two opposite jigs 200 configured to press and fix the battery cell 10 at opposite sides thereof, whereby it is possible to prevent short circuit of or damage to the electrode tab 11 during a battery cell transfer process.

When describing the electrode tab protection device 100 in more detail with reference to FIG. 3, the electrode tab protection device 100 includes an electrode tab insertion portion 110, into which the electrode tab is inserted, and a fixing portion 120 configured to fix the electrode tab insertion portion 110 in order to prevent movement of the electrode tab insertion portion.

Here, the size of the electrode tab insertion portion 110 may be appropriately selected within a range within which the entirety of the electrode tab 11 is protected and the electrode tab 11 is not damaged when the electrode tab 11 is inserted or separated in consideration of the length and the thickness of the electrode tab 11 that is inserted into the electrode tab insertion portion. It is preferable for the electrode tab insertion portion 110 to be made of an electrically insulative material in order to prevent occurrence of short circuit.

Meanwhile, the fixing portion 120 has a structure in which one side of the fixing portion is connected to the electrode tab insertion portion 110 and the other side of the fixing portion is coupled to the jigs 200 in order to fix the electrode tab insertion portion 110. Although any of various well-known methods may be used as a method of coupling the fixing portion to the jigs 200, it is preferable for the fixing portion to be coupled to the jigs in a clip form in consideration of work convenience and repetitive use.

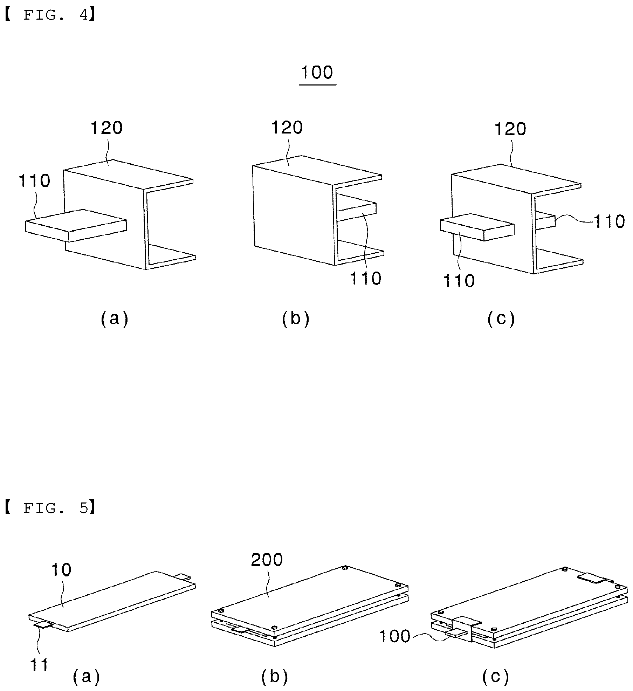

In addition, the position at which one side of the fixing portion 120 is connected to the electrode tab insertion portion 110 may be arbitrarily selected within a range within which it is possible to fix the electrode tab insertion portion 110. For example, one side of the fixing portion 120 may be located at any one of opposite ends of the electrode tab insertion portion 110, as shown in (a) and (b) of FIG. 4, or one side of the fixing portion 120 may be located between the opposite ends of the electrode tab insertion portion 110, as shown in (c) of FIG. 4.

Meanwhile, the two jigs 200 are located at opposite surfaces of the battery cell 10 to press and fix the battery cell 10 disposed therebetween. The jigs 200 are provided with jig fastening portions 210 configured to fix the two opposite jigs 200.

In the drawings of the present invention, the case in which the jig fastening portions 210 are constituted by fastening holes formed in the vicinity of corners of the jigs 200 and bolts and nuts inserted through the fastening holes to fix the jigs 200 is shown. However, the jig fastening portions 210 are not limited thereto, and it is possible to fix the battery cell 10 while pressing the battery cell between the two jigs 200 using various well-known methods.

Meanwhile, FIG. 5 shows a method of fixing the battery cell 10 to the battery cell transfer apparatus 1000 according to the present invention. First, the two jigs 200 are disposed at opposite surfaces of the battery cell 10, the two jigs 200 are fastened and fixed to each other through the jig fastening portions 210, the electrode tab 11 of the battery cell 10 is inserted into the electrode tab insertion portion 110 of the electrode tab protection device 100, and the fixing portion 120 is fixed to the jigs 200.

Subsequently, the battery cell transfer apparatus 1000 including the battery cell 10 may be safely transferred to a desired process, and the battery cell may be used in the state in which the electrode tab protection device 100 and the jigs 200 are removed, as needed.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

B, 10: Battery cells
T, 11: Electrode tabs
20, 100: Electrode tab protection devices
21, 110: Electrode tab insertion portions
120: Fixing portion
200: Jig
210: Jig fastening portion
1000: Battery cell transfer apparatus

## Claims

1. A battery cell transfer apparatus (1000) configured to transfer a battery cell (10) having an electrode assembly comprising an electrode tab (11) received in a battery case, the battery cell transfer apparatus (1000) comprising:
two jigs (200) configured to press and fix opposite surfaces of the battery cell (10); and
an electrode tab protection device (100) configured to prevent occurrence of short circuit as a result of the electrode tab (11) coming into contact with the jigs (200) or a peripheral device during transfer of the battery cell (10),
wherein the electrode tab protection device (100) comprises an electrode tab insertion portion (110) configured to allow the electrode tab (11) to be inserted thereinto and a fixing portion (120) configured to fix the electrode tab protection device (100).

2. The battery cell transfer apparatus (1000) according to claim 1, wherein the fixing portion (120) has one side connected to the electrode tab insertion portion (110) and the other side coupled to the jigs (200), whereby movement of the electrode tab insertion portion (110) is prevented during transfer.

3. The battery cell transfer apparatus (1000) according to claim 1, wherein the electrode tab protection device (100) is identical in number to the electrode tab (11) such that the electrode tab (11) is individually inserted.

4. The battery cell transfer apparatus (1000) according to claim 1, wherein the electrode tab protection device (100) is configured such that the fixing portion (120) is detachably attached to the jigs (200) in a clip form.

5. The battery cell transfer apparatus (1000) according to claim 1, wherein the fixing portion (120) is located at one of opposite ends of the electrode tab insertion portion (110).

6. The battery cell transfer apparatus (1000) according to claim 1, wherein the fixing portion (120) is located at a middle part of the electrode tab insertion portion (110).

7. The battery cell transfer apparatus (1000) according to claim 1, wherein the electrode tab insertion portion (110) is made of an electrically insulative material.

8. A battery cell transfer method comprising:
locating a battery cell (10) comprising an electrode tab (11) between two jigs (200);
pressing and fixing the two jigs (200) to fix the battery cell (10);
inserting the electrode tab (11) of the fixed battery cell (10) into an electrode tab protection device (100);
fixing the electrode tab protection device (100) to the jigs (200); and
transferring the jigs (200) having the electrode tab protection device (100) fixed thereto.

9. The battery cell transfer method according to claim 8, wherein the electrode tab protection device (100) comprises an electrode tab insertion portion (110) configured to allow the electrode tab (11) to be inserted thereinto and a fixing portion (120) configured to fix the electrode tab protection device (100).

10. The battery cell transfer method according to claim 9, wherein the fixing portion (120) has one side connected to the electrode tab insertion portion (110) and the other side coupled to the jigs (200), whereby movement of the electrode tab insertion portion (110) is prevented during transfer.

11. The battery cell transfer method according to claim 9, wherein the electrode tab insertion portion (110) is made of an electrically insulative material.
